Europäisches Patentamt

European Patent Office

Office européen des brevets

(19)

(11) **EP 1 115 093 A2**

(12) **EUROPÄISCHE PATENTANMELDUNG**

(43) Veröffentlichungstag:
**11.07.2001 Patentblatt 2001/28**

(51) Int Cl.⁷: **G07F 7/10**, G06K 19/073,
H04L 9/22

(21) Anmeldenummer: 00204701.7

(22) Anmeldetag: **22.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **08.01.2000 DE 10000502**

(71) Anmelder:
• **Philips Corporate Intellectual Property GmbH 52064 Aachen (DE)**
• **Koninklijke Philips Electronics N.V. 5621 BA Eindhoven (NL)**

(72) Erfinder:
• **Einfeldt, Walter, Philips Corporate I. P. GmbH 52064 Aachen (DE)**
• **Bretschneider, Ernst, Philips Corporate I. P. GmbH 52064 Aachen (DE)**

(74) Vertreter: **Volmer, Georg, Dipl.-Ing. Philips Corporate Intellectual Property GmbH Habsburgerallee 11 52064 Aachen (DE)**

(54) **Datenverarbeitungseinseinrichtung und Verfahren zu dessen Betrieb**

(57) Die vorliegende Erfindung betrifft ein Verfahren zum Erzeugen einer Zufallszahlenreihe sowie einen Zufallszahlengenerator, insbesondere für eine Chipkarte oder Smart Card. Hierbei umfasst der Zufallszahlengenerator folgendes:

- Eine vorbestimmte Anzahl Nosz von voneinander unabhängigen Frequenzoszillatoren (10, 12),
- eine vorbestimmte Anzahl Nosz von Flipflops (14, 16), wobei ein Ausgang (26) eines Frequenzoszillators (10, 12) mit jeweils einem Eingang D (30) eines Flipflops (14, 16) verbunden ist,
- ein Logikschaltelement (18), welches jeweilige Ausgänge Q (32) der Flipflops (14, 16) als Eingangswerte (36, 38) erhält und gemäß einer vorbestimmten Logikoperation diesen Eingangswerten (36, 38) einen Ausgangswert (40) zuordnet,
- eine Paritätsschaltung (20), welche die Parität einer vorbestimmten Anzahl Nlog von Ausgangswerten (40) aus dem Logikschaltelement (18) bestimmt,
- ein Zufallszahlenregister (22), welches eine vorbestimmte Anzahl Nz von Paritätszahlen (44) aus der Paritätsschaltung (20) zwischenspeichert und als Nz-Bit-Zufallszahl abgibt und
- einen Eingang (58) für eine externe Taktsignalquelle, welche die Flipflops (14, 16), die Paritätsschaltung (20) und das Zufallszahlenregister (22) taktet.

EP 1 115 093 A2

**Beschreibung**

Technisches Gebiet

Die Erfindung betrifft ein Verfahren zum Erzeugen einer Zufallszahlenreihe, insbesondere in einer Chipkarte bzw. Smart Card, gemäß dem Oberbegriff des Anspruchs 1. Die Erfindung betrifft ferner einen Zufallszahlengenerator, insbesondere für eine Chipkarte oder Smart Card, gemäß dem Oberbegriff des Anspruchs 11.

Stand der Technik

In vielen Datenverarbeitungsgeräten mit integrierter Schaltung dienen beispielsweise kryptographische Operationen zum Schutz des Betriebes dieser Geräte bzw. zum Schutz von in dem Gerät transportierten Daten. Die hierfür notwendigen Rechenoperationen werden dabei sowohl von Standard-Rechenwerken (CPU) als auch von dedizierten CryptoRechenwerken (Co-Prozessor) durchgeführt. Ein typisches Beispiel für letzteres sind Chipkarten bzw. IC-Karten, wie beispielsweise eine sogen. Smart Card. Bei in diesem Zusammenhang verwendeten Daten bzw. Zwischenergebnissen handelt es sich üblicherweise um sicherheitsrelevante Informationen, wie beispielsweise kryptographische Schlüssel oder Operanden.

Datenverarbeitungsgeräte, wie beispielsweise die vorerwähnte Smart Card, welche kryptographische Operationen ausführen, benötigen einen integrierten bzw. "On-Chip" vorgesehenen Zufallszahlengenerator.

Aus der US 4 799 259 ist ein digitaler Zufallszahlengenerator bekannt, bei dem mehrere Frequenzoszillatoren mit einem EXKLUSIV-ODER-Netzwerk (XOR) verbunden sind. Dieses XOR-Netzwerk stellt an seinem Ausgang ein Zufallssignal zur Verfügung, welches einem Flipflop zugeführt wird. Bei jedem Taktsignal tastet das Flipflop den Ausgang des XOR-Netzwerkes ab und speichert einen entsprechenden Wert bzw. stellt diesen an seinem Ausgang zur Verfügung. Sowohl die Frequenzoszillatoren als auch das Flipflop werden von ein und derselben Signalquelle getaktet. Daher ist zum Erzeugen einer Reihe von Zufallszahlen dieses Taktsignal von einer digitalen Rauschtaktsignalquelle abgeleitet. Dies ist jedoch insbesondere dann aufwendig und kostenintensiv, wenn die Erzeugen von Zufallszahlen auf einem Chip integriert werden soll.

Aus der WO 97/4370 ist ein Zufallszahlengenerator mit mehreren Hochfrequenzringoszillatoren und einem spannungsgesteuerten Niederfrequenzoszillator, welcher ein Rauschsignal als Eingang erhält, bekannt. Abhängig vom Ausgangssignal des spannungsgesteuerten Niederfrequenzoszillators werden die Hochfrequenzringoszillatoren abgetastet. Hierzu ist jedem Frequenzoszillator ein vom Takt des Niederfrequenzoszillators gesteuertes Flipflop nachgeschaltet, welches sicherstellt, dass in den erzeugten Zufallszahlen entsprechende Nullen und Einsen mit gleicher Wahrscheinlichkeit bzw. gleich häufig auftreten.

Darstellung der Erfindung, Aufgabe, Lösung, Vorteile

Es ist Aufgabe der vorliegenden Erfindung, ein verbessertes Verfahren sowie einen verbesserten Zufallszahlengenerator der obengenannten Art zur Verfügung zu stellen, welche die obengenannten Nachteile beseitigen und eine unabhängige "On-Chip"-Erzeugung von Zufallszahlen zur Verfügung stellt.

Diese Aufgabe wird durch ein Verfahren der o.g. Art mit den in Anspruch 1 gekennzeichneten Merkmalen und durch einen Zufallszahlengenerator der o.g. Art mit den in Anspruch 11 gekennzeichneten Merkmalen gelöst.

Dazu sind bei einem Verfahren der o.g. Art erfindungsgemäß folgende Schritte vorgesehen:

(a) Abtasten der Ausgänge von Nosz unabhängigen Frequenzoszillatoren und Zwischenspeichern entsprechender Nosz Ausgangsignale der Nosz Frequenzoszillatoren bei jedem Takt eines Taktsignals einer externen Taktsignalquelle,
(b) Zuführen der zwischengespeicherten Signale von Schritt (a) an eine logische Operation, welche den Nosz zwischengespeicherten Signalen als Eingangswerte einen vorbestimmten Ausgangswert zuordnet,
(c) Erzeugen der Parität einer vorbestimmten Anzahl Nlog von Ausgangswerten von Schritt (b) bei jedem Nlog-ten Takt des externen Taktsignals,
(d) Speichern einer vorbestimmten Anzahl Nz von Paritätszahlen in einem Zufallszahlenregister und
(e) Auslesen des Zufallszahlenregisters als Zufallszahl alle $N_z{}^*N_{log}$ Takte des Taktsignals.

Dies hat den Vorteil, dass auf einfache und damit kostengünstige Art und Weise eine unabhängige Zufallszahlenreihe zur Verfügung steht, welche im Wesentlichen "On-Chip" erzeugbar ist und lediglich ein externes Taktsignal benötigt.

Vorzugsweise Weitergestaltungen des Verfahrens sind in den Ansprüchen 2 bis 10 beschrieben.

Zum Erzielen einer möglichst gleich hohen Wahrscheinlichkeit der Zufallszahlen in der Zufallszahlenreihe wird die Frequenz von wenigstens einem Frequenzoszillator in Abhängigkeit von einem MSB (Most Significant Bit) eines Signaturregisters verändert und/oder moduliert, wobei beispielsweise die Frequenz des veränderten bzw. modulierten Frequenzoszillators in Abhängigkeit von dem MSB des Signaturregisters zwischen >20 MHz und >40 MHz umgeschaltet wird.

In einer bevorzugten Ausführungsform wird die Frequenz wenigstens eines Frequenzoszillators als >30 MHz gewählt und werden die Frequenzoszillatoren spannungsgesteuert oder stromgesteuert. Die Ausgangsignale der beiden Frequenzoszillatoren in Schritt (a) werden beispielsweise in einem jeweiligen Flipflop, insbesondere einem Verzögerungsflipflop (D-F/F), zwischengespeichert. Die Anzahl Nosz ist beispielsweise eine ganze Zahl größer oder gleich 1, insbesondere Nosz = 2 und die Anzahlen Nlog und Nz sind zweckmäßigerweise jeweils ganze Zahlen größer oder gleich 1.

Zweckmäßigerweise ist in Schritt (c) die logische Operation eine Und-Operation (AND), eine ODER-Operation (OR), eine Weder-Noch-Operation (NOR), eine Exklusiv-Oder-Operation (XOR), eine Nicht-Und-Operation (NAND) oder eine Exklusiv-Weder-Noch-Operation (XNOR).

Um ein wiederkehrendes Muster in der Zufallszahlenreihe zu vermeiden, werden die Frequenzen der Nosz Frequenzoszillatoren derart gewählt, dass keine Frequenz eines Frequenzoszillators ein ganzzahliges Vielfaches eines anderen Frequenzoszillators oder des externen Taktsignals ist.

Ferner umfasst ein Zufallszahlengenerator erfindungsgemäß folgendes:

- Eine vorbestimmte Anzahl Nosz von voneinander unabhängigen Frequenzoszillatoren,
- eine vorbestimmten Anzahl Nosz von Flipflops, wobei ein Ausgang eines Frequenzoszillators mit jeweils einem Eingang D eines Flipflops verbunden ist,
- ein Logikschaltelement, welches jeweilige Ausgänge Q der Flipflops als Eingangs Werte erhält und gemäß einer vorbestimmten Logikoperation diesen Eingangswerten einen Ausgangswert zuordnet,
- eine Paritätsschaltung, welche die Parität einer vorbestimmten Anzahl Nlog von Ausgangswerten aus dem Logikschaltelement bestimmt,
- ein Zufallszahlenregister, welches eine vorbestimmte Anzahl Nz von Paritätszahlen aus der Paritätsschaltung zwischenspeichert und als Nz-Bit-Zufallszahl abgibt und
- einen Eingang für eine externe Taktsignalquelle, welche die Flipflops, die Paritätsschaltung und das Zufallszahlenregister taktet.

Dies hat den Vorteil, dass zum Erzeugen einer Zufallszahlenreihe ein einfacher und damit kostengünstiger Zufallszahlengenerator zur Verfügung steht, welcher auf einfache und kostengünstige Weise auf einem Chip integrierbar ist und lediglich ein einfaches externes Taktsignal benötigt.

Vorzugsweise Weiterbildungen der Datenverarbeitungseinrichtung sind in den Ansprüchen 12 bis 20 beschrieben.

Zum Erzielen einer möglichst gleich hohen Wahrscheinlichkeit der Zufallszahlen in der Zufallszahlenreihe ist wenigstens ein Frequenzoszillator mit einem Ausgang eines Signaturregisters verbunden, welches dem Frequenzoszillator ein MSB (Most Significant Bit) zuführt, wobei der mit dem Signaturregister verbundene Frequenzoszillator beispielsweise derart ausgebildet ist, dass dieser in Abhängigkeit von dem MSB des Signaturregisters seine Frequenz zwischen >20 MHz und >40 MHz umschaltet.

In einer bevorzugten Ausführungsform beträgt die Frequenz wenigstens eines Frequenzoszillators >30 MHz und sind die Frequenzoszillatoren spannungsgesteuert oder stromgesteuert ausgebildet. Wenigstens ein Flipflop ist als Verzögerungsflipflop (D-F/F) ausgebildet. Nosz ist beispielsweise eine ganze Zahl größer oder gleich 1, insbesondere ist Nosz = 2, und Nlog sowie Nz sind zweckmäßigerweise jeweils ganze Zahlen größer oder gleich 1.

Zweckmäßigerweise ist das Logikschaltelement ein Und-Element (AND), ein ODER-Element (OR), ein Weder-Noch-Element (NOR), ein Exklusiv-Oder-Element (XOR), ein Nicht-Und-Element (NAND) oder ein Exklusiv-Weder-Noch-Element (XNOR).

Um ein wiederkehrendes Muster in der Zufallszahlenreihe zu vermeiden, sind die Nosz Frequenzoszillatoren derart ausgebildet, dass keine Frequenz eines Frequenzoszillators ein ganzzahliges Vielfaches eines anderen Frequenzoszillators oder des externen Taktsignals ist.

Kurze Beschreibung der Zeichnungen

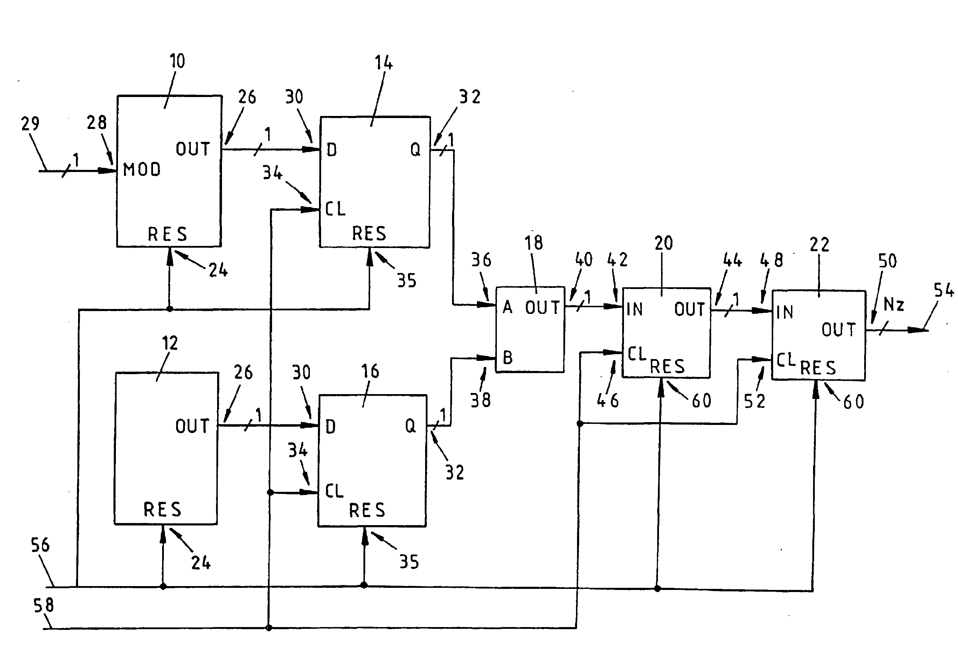

Nachstehend wird die Erfindung anhand der beigefügten Zeichnung näher erläutert. Diese zeigt in der einzigen Fig. ein schematisches Blockschaltbild einer bevorzugten Ausführungsform eines erfindungsgemäßen Zufallszahlengenerators.

Bester Weg zur Ausführung der Erfindung

Die in der einzigen Figur dargestellte bevorzugte Ausführungsform eines erfindungsgemäßen Zufallszahlengenerators umfasst zwei Frequenzoszillatoren 10 (OSC1) und 12 (OSC2), zwei Flipflops 14 (LATCH1) und 16 (LATCH2) vom Typ Verzögerungsflipflop (D-F/F), ein Logikschaltelement 18 (XNOR), welches eine EXKLUSIV-NICHT-ODER-Operation (XNOR) ausführt, einen Paritätsgenerator 20 (PARITY) und ein Zufallszahlenregister 22 (REG).
Die Frequenzoszillatoren 10, 12 weisen jeweils einen Rücksetzeingang RES 24 und einen Ausgang OUT 26 auf. Der in der Fig. obere Frequenzoszillator 10 (OSC1) weist zusätzliche einen Eingang MOD 28 auf, welcher mit einem Ausgang eines nicht dargestellten Signaturregisters verbunden ist. Dieses führt dem Frequenzoszillator 10 in einem Bitstrom (SIGMSB 29) aufeinanderfolgende MSB (Most Significant Bit) des Signaturregisters zu und variiert damit eine Betriebsfrequenz des Frequenzoszillators 10 (OSC1).
Die Flipflops 14, 16 weisen jeweils einen mit einem jeweiligen Ausgang OUT 26 eines Frequenzoszillators 10, 12 verbundenen Eingang D 30, einen Ausgang Q 32 einen Takteingang CL 34 sowie einen Rücksetzeingang RES 35 auf. Das Logikschaltelement 18 weist zwei jeweils mit dem Ausgang Q 32 verbundene Eingänge A 36 und B 38 sowie einen Ausgang OUT 40 auf. Der Paritätsgenerator 20 weist einen mit dem Ausgang OUT 40 des Logikschaltelements 18 verbundenen Eingang IN 42, einen Ausgang OUT 44 sowie einen Takteingang CL 46 auf. Das Zufallszahlenregister 22 weist einen mit dem Ausgang OUT 44 des Paritätsgenerators 20 verbundenen Eingang IN 48, einen Ausgang OUT 50 sowie einen Takteingang CL 52 auf. Der Ausgang OUT 50 des Zufallszahlenregisters ist mit einem Datenbus 54 verbunden.
Ein externes Rücksetzsignal 56 (RESET) wird bei Bedarf den jeweiligen Eingängen RES 24 der Frequenzoszillatoren 10, 12 bzw. den Eingängen RES 35 der Flipflops 14, 16 zugeführt. Ein externes Taktsignal 58 (EXTCLK) wird den Takteingängen 34, 46 bzw. 52 von Flipflops 14 bzw. 16, Paritätsgenerator 20 und Zufallszahlenregister 22 zugeführt. Jeweilige Rücksetzeingänge RES 60 von Paritätsgenerator 20 und Zufallszahlenregister 22 sind ebenfalls mit dem externen Rücksetzsignal 56 (RESET) verbunden.
Die Frequenzoszillatoren 10, 12 sind als "On-Chip"- Frequenzoszillatoren, d.h. auf einem Chip integriert, sowie als stromgesteuerte Oszillatoren (CCO - Current Controlled Oscillators) ausgebildet. Diese werden somit nicht von einer Eingangs- bzw. Betriebsspannung beeinflusst. Der in der Fig. untere Frequenzoszillator 12 (OSC2) erzeugt eine Frequenz >30 MHz, während der in der Fig. obere Frequenzoszillator 10 (OSC1) seine Frequenz in Abhängigkeit vom kontinuierlichen Bitstrom des Signaturregisters (SIGMSB 29) zwischen >20 MHz und >40 MHZ umschaltet. Die Frequenzen der Frequenzoszillatoren 10, 12 sind dabei derart gewählt, dass sie gegenseitig keine ganzzahligen Vielfachen voneinander und auch keine ganzzahligen Vielfachen der externen Taktfrequenz 58 sind.
Nachfolgend wird die Funktionsweise des erfindungsgemäßen Zufallszahlengenerators gemäß der einzigen Fig. näher erläutert:
Bei jedem Taktsignal 58 werden die Ausgänge OUT 26 der Frequenzoszillatoren 10, 12 abgetastet und in den Flipflops 14, 16 zwischengespeichert. Das jeweils am Ausgang Q der Flipflops 14, 16 vorhandene Signal ist somit ein quasi "eingefrorenes" bzw. gehaltenes Signal des zugehörigen Frequenzoszillators zum Zeitpunkt des letzten Taktsignals 58. Die Ausgangssignale der Ausgänge Q 32 der Flipflops 14, 16 werden dem Logikschalelement 18 jeweils an dessen Eingängen A 36 und B 38 zugeführt und einer XNOR-Operation (EXKLUSIV-NICHT-ODER) unterzogen. Im Ergebnis ordnet die XNOR-Operation je zwei Eingangssignalen an den Eingängen A 36 und B 38 ein einziges Ausgangssignal am Ausgang OUT 40 des Logikschaltelements 18 zu. Dieses Ergebnis der XNOR-Operation wird dem Eingang IN 42 des Paritätsgenerators 20 zugeführt. Dieser ist derart ausgebildet, dass er nach einer vorbestimmten Anzahl Nlog von Taktsignalen eine Parität der zuletzt eingegangenen Nlog Ergebnisse von XNOR-Operationen bestimmt und an das Zufallszahlenregister 22 überträgt, welches als Nz-Bit-Register ausgebildet ist, d.h. Nz aufeinanderfolgende Bits aus dem Paritätsgenerator 20 zu einer neuen Zufallszahl abspeichert. Die Auslesefrequenz des Zufallszahlenregisters 22 ist somit das Produkt Nlog$^*$Nz. Mit anderen Worten wird das Zufallszahlenregisters 22 alle Nlog$^*$Nz Takte des Taktsignals 58 ausgelesen und übergibt eine neue Zufallszahl an den Datenbus 54. Jede Zufallszahl liegt dabei in binärer Form als Folge von Nullen und Einsen vor, so dass es sich bei dem dargestellten Zufallszahlengenerator um einen digitalen Zufallszahlengenerator handelt.
Jede an den Datenbus 54 gegebene Zufallszahl Z setzt sich somit gemäß

$$Z = [bit\_1, bit\_2, bit\_3, ... , bit\_Nz]$$

aus Nz Bits zusammen, wobei jedes Bit eine Parität von Nlog XNOR-Operationen von Ausgangswerten f_nosz (nosz = 1, ... ,Nosz) der Nosz Frequenzoszillatoren gemäß

$$bit\_nz = PARITÄT\_nz[XNOR\_1(f\_1, .. f\_Nosz), ..., XNOR\_Nlog(f\_1, ..., f\_Nosz)]$$

.. 

mit nz = 1, ... ,Nz

ist.

Es versteht sich, dass die Darstellung mit zwei Frequenzoszillatoren 10, 12 lediglich beispielhaft ist. Alternativ können auch drei, vier oder mehr Frequenzoszillatoren vorgesehen sein. Hierbei ist dann eine entsprechende Anzahl von Flipflops 14, 16 sowie von Eingängen am Logikschaltelement 18 vorgesehen. In einer weiteren Alternative erfolgt das Sammeln der Nz Bits parallel, wobei die Anordnung gemäß der einzigen Fig. Nz-mal vorgesehen ist und das Zufallszahlenregister 22 jeweils nur ein Bit zwischenspeichert. Jede diese Anordnungen liefert dann parallel ein Bit der Zufallszahl Z mit unterschiedlicher Wertigkeit. Dies hat den Vorteil, daß sich die Zeit zwischen zwei neuen Zufallszahlen auf die Nlog Takte des Taktsignals 58 zur Paritätsbildung verkürzt.

## BEZUGSZEICHENLISTE

| | |
|---|---|
| 10 | Frequenzoszillator OSC1 |
| 12 | Frequenzoszillator OSC1 |
| 14 | Verzögerungsflipflop LATCH1 |
| 16 | Verzögerungsflipflop LATCH2 |
| 18 | Logikschaltelement XNOR |
| 20 | Paritätsgenerator PARITY |
| 22 | Zufallszahlenregister REG |
| 24 | Rücksetzeingang RES des Frequenzoszillators |
| 26 | Ausgang OUT des Frequenzoszillators |
| 28 | zusätzlicher Eingang MOD für MSB des Frequenzoszillators |
| 29 | SIGMSB |
| 30 | Eingang D des Flipflops |
| 32 | Ausgang Q des Flipflops |
| 34 | Takteingang CL des Flipflops |
| 35 | Rücksetzeingang RES des Flipflops |
| 36 | Eingang A des Logikschaltelements |
| 38 | Eingang B des Logikschaltelements |
| 40 | Ausgang OUT des Logikschaltelements |
| 42 | Eingang IN des Paritätsgenerators |
| 44 | Ausgang OUT des Paritätsgenerators |
| 46 | Takteingang CL des Paritätsgenerators |
| 48 | Eingang IN des Zufallszahlenregisters |
| 50 | Ausgang OUT des Zufallszahlenregisters |
| 52 | Takteingang CL Zufallszahlenregisters |
| 54 | Datenbus |
| 56 | externes Rücksetzsignal (RESET) |
| 58 | externes Taktsignal (EXTCLK) |
| 60 | Rücksetzeingänge RES von Paritätsgenerator und Zufallszahlenregister |
| Nosz | Anzahl der Frequenzoszillatoren |
| Nlog | Anzahl der logischen Operationen für eine Paritätsbildung |
| Nz | Anzahl der Bits für eine Zufallszahl |
| Z | Zufallszahl |

**Patentansprüche**

1. Verfahren zum Erzeugen einer Zufallszahlenreihe, insbesondere in einer Chipkarte bzw. Smart Card, <u>gekennzeichnet durch</u> folgende Schritte,

(a) Abtasten der Ausgänge von Nosz unabhängigen Frequenzoszillatoren und Zwischenspeichern entsprechender Nosz Ausgangsignale der Nosz Frequenzoszillatoren bei jedem Takt eines Taktsignals einer externen Taktsignalquelle,
(b) Zuführen der zwischengespeicherten Signale von Schritt (a) an eine logische Operation, welche den Nosz zwischengespeicherten Signalen als Eingangswerte einen vorbestimmten Ausgangswert zuordnet,

(c) Erzeugen der Parität einer vorbestimmten Anzahl Nlog von Ausgangswerten von Schritt (b) bei jedem Nlog-ten Takt des externen Taktsignals,

(d) Speichern einer vorbestimmten Anzahl Nz von Paritätszahlen in einem Zufallszahlenregister und

(e) Auslesen des Zufallszahlenregisters als Zufallszahl alle Nz*Nlog Takte des Taktsignals.

2. Verfahren nach Anspruch 1,
dadurch gekennzeichnet,
dass die Frequenz von wenigstens einem Frequenzoszillator in Abhängigkeit von einem MSB (Most Significant Bit) eines Signaturregisters verändert und/oder moduliert wird.

3. Verfahren nach Anspruch 2,
dadurch gekennzeichnet,
dass die Frequenz des veränderten bzw. modulierten Frequenzoszillators in Abhängigkeit von dem MSB des Signaturregisters zwischen >20 MHz und >40 MHz umgeschaltet wird.

4. Verfahren nach einem der vorhergehenden Ansprüche,
dadurch gekennzeichnet,
dass die Frequenz wenigstens eines Frequenzoszillators als >30 MHz gewählt wird.

5. Verfahren nach einem der vorhergehenden Ansprüche,
dadurch gekennzeichnet,
dass die Frequenzoszillatoren spannungsgesteuert oder stromgesteuert werden.

6. Verfahren nach einem der vorhergehenden Ansprüche,
dadurch gekennzeichnet,
dass in Schritt (a) die Ausgangsignale der beiden Frequenzoszillatoren in einem jeweiligen Flipflop, insbesondere einem Verzögerungsflipflop (D-F/F), zwischengespeichert werden.

7. Verfahren nach einem der vorhergehenden Ansprüche,
dadurch gekennzeichnet,
dass in Schritt (c) die logische Operation eine Und-Operation (AND), eine ODER-Operation (OR), eine Weder-Noch-Operation (NOR), eine Exklusiv-Oder-Operation (XOR), eine Nicht-Und-Operation (NAND) oder eine Exklusiv-Weder-Noch-Operation (XNOR) ist.

8. Verfahren nach einem der vorhergehenden Ansprüche,
dadurch gekennzeichnet,
dass die Frequenzen der Nosz Frequenzoszillatoren derart gewählt werden, dass keine Frequenz eines Frequenzoszillators ein ganzzahliges Vielfaches eines anderen Frequenzoszillators oder des externen Taktsignals ist.

9. Verfahren nach einem der vorhergehenden Ansprüche,
dadurch gekennzeichnet,
dass Nosz eine ganze Zahl größer oder gleich 1, insbesondere Nosz = 2 ist.

10. Verfahren nach einem der vorhergehenden Ansprüche,
dadurch gekennzeichnet,
dass Nlog und Nz jeweils ganze Zahlen größer oder gleich 1 sind.

11. Zufallszahlengenerator, insbesondere für eine Chipkarte oder Smart Card, insbesondere zum Ausführen eines Verfahrens gemäß wenigstens einem der vorhergehenden Ansprüche,
gekennzeichnet durch

eine vorbestimmte Anzahl Nosz von voneinander unabhängigen Frequenzoszillatoren (10, 12),
eine vorbestimmte Anzahl Nosz von Flipflops (14, 16), wobei ein Ausgang (26) eines Frequenzoszillators (10, 12) mit jeweils einem Eingang D (30) eines Flipflops (14,16) verbunden ist,
ein Logikschaltelement (18), welches jeweilige Ausgänge Q (32) der Flipflops (14, 16) als Eingangswerte (36, 38) erhält und gemäß einer vorbestimmten Logikoperation diesen Eingangswerten (36, 38) einen Ausgangswert (40) zuordnet,
eine Paritätsschaltung (20), welche die Parität einer vorbestimmten Anzahl Nlog von Ausgangswerten (40) aus dem Logikschaltelement (18) bestimmt,

ein Zufallszahlenregister (22), welches eine vorbestimmte Anzahl Nz von Paritätszahlen (44) aus der Paritätsschaltung (20) zwischenspeichert und als Nz-Bit-Zufallszahl abgibt und

einen Eingang (58) für eine externe Taktsignalquelle, welche die Flipflops (10, 12), die Paritätsschaltung (14, 16) und das Zufallszahlenregister (22) taktet.

12. Zufallszahlengenerator nach Anspruch 11,
dadurch gekennzeichnet,
dass wenigstens ein Frequenzoszillator (10) mit einem Ausgang eines Signaturregisters verbunden ist, welches dem Frequenzoszillator ein MSB (Most Significant Bit) (29) zuführt, wobei sich die Frequenz des Frequenzoszillators (10) in Abhängigkeit von dem MSB (29) des Signaturregisters verändert.

13. Zufallszahlengenerator nach Anspruch 12,
dadurch gekennzeichnet,
dass der mit dem Signaturregister verbundene Frequenzoszillator (10) derart ausgebildet ist, dass dieser in Abhängigkeit von dem MSB (29) des Signaturregisters seine Frequenz zwischen >20 MHz und >40 MHz umschaltet.

14. Zufallszahlengenerator nach einem der Ansprüche 11 bis 13,
dadurch gekennzeichnet,
dass die Frequenz wenigstens eines Frequenzoszillators (12) >30 MHz beträgt.

15. Zufallszahlengenerator nach einem der Ansprüche 11 bis 14,
dadurch nekennzeichnet,
dass die Frequenzoszillatoren (10, 12) als spannungsgesteuerte oder stromgesteuerte Frequenzoszillatoren ausgebildet sind.

16. Zufallszahlengenerator nach einem der Ansprüche 11 bis 15,
dadurch gekennzeichnet,
dass wenigstens ein Flipflop (14, 16) als Verzögerungsflipflop (D-F/F) ausgebildet ist.

17. Zufallszahlengenerator nach einem der Ansprüche 11 bis 16,
dadurch gekennzeichnet,
dass das Logikschaltelement (18) ein Und-Element (AND), ein ODER-Element (OR), ein Weder-Noch-Element (NOR), ein Exklusiv-Oder-Element (XOR), ein Nicht-Und-Element (NAND) oder ein Exklusiv-Weder-Noch-Element (XNOR) ist.

18. Zufallszahlengenerator nach einem der Ansprüche 11 bis 17,
dadurch gekennzeichnet,
dass die Nosz Frequenzoszillatoren (10, 12) derart ausgebildet sind, dass keine Frequenz eines Frequenzoszillators (10, 12) ein ganzzahliges Vielfaches eines anderen Frequenzoszillators (10, 12) oder des externen Taktsignals (58) ist.

19. Zufallszahlengenerator nach einem der Ansprüche 11 bis 18,
dadurch gekennzeichnet,
dass Nosz eine ganze Zahl größer oder gleich 1, insbesondere Nosz = 2 ist.

20. Zufallszahlengenerator nach einem der Ansprüche 11 bis 19,
dadurch gekennzeichnet,
dass Nlog und Nz jeweils ganze Zahlen größer oder gleich 1 sind.

EP 1 115 093 A2